(19) Europäisches Patentamt
European Patent Office
Office européen des brevets

(11) **EP 2 008 811 B1**

(12) **EUROPEAN PATENT SPECIFICATION**

(45) Date of publication and mention
of the grant of the patent:
**25.05.2016 Bulletin 2016/21**

(51) Int Cl.:
***B32B 27/32*** *(2006.01)*     ***B32B 27/36*** *(2006.01)*

(21) Application number: **07739073.0**

(86) International application number:
**PCT/JP2007/055630**

(22) Date of filing: **20.03.2007**

(87) International publication number:
**WO 2007/122942 (01.11.2007 Gazette 2007/44)**

(54) **SHRINK FILM**

SCHRUMPFFOLIE

PELLICULE RÉTRACTABLE

(84) Designated Contracting States:
**DE FR GB**

(30) Priority: **31.03.2006 JP 2006099081**

(43) Date of publication of application:
**31.12.2008 Bulletin 2009/01**

(73) Proprietor: **Fuji Seal International, Inc.**
**Osaka-shi,**
**Osaka 532-0003 (JP)**

(72) Inventor: **UMEDA, Hideaki**
**Osaka-shi, Osaka 538-0041 (JP)**

(74) Representative: **Grünecker Patent- und**
**Rechtsanwälte**
**PartG mbB**
**Leopoldstraße 4**
**80802 München (DE)**

(56) References cited:
**WO-A-01/00716**     **WO-A1-2004/058499**
**JP-A- 05 261 873**     **JP-A- 06 071 828**
**JP-A- 11 115 129**     **JP-A- 11 262 981**
**JP-A- 2005 201 987**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to shrink films. More specifically, it relates to shrink films that have a low specific gravity, exhibit excellent shrink properties, and have an improved interlayer strength and toughness.

Background Art

Exemplary widely used containers for beverages such as tea and soft drinks are plastic bottles such as poly(ethylene terephthalate) bottles (PET bottles) and metal bottles such as bottle cans. These containers often bear plastic labels for indication or for imparting decorativeness or functionality. Accordingly, there have been widely used, as such plastic labels, heat-shrinkable plastic films (shrink films) that shrink by the action of steam or hot air to follow and fit over containers, typically because such shrink films can satisfactorily follow the containers and provide large indication areas.

As the shrink films, films made typically of polyester resins, polystyrene resins, or polyolefin resins are generally used. Although the films made of polyester resins or polystyrene resins are highly shrinkable, those made of polyester resins show excessively high shrinking speeds and shrinkage stress, thereby must undergo shrinkage under strict conditions for yielding a beautiful finish, and are thereby poor in workability; and those made of polystyrene resins, although they easily yield a beautiful finish, are poor in dimensional stability during storage, thereby must be stored under strict managements, and are thereby poor in handleability. The films made of polyolefin resins are not highly shrinkable, although they are highly flexible, give a beautiful finish, have a low specific gravity, are thereby light-weight, and are separable and recoverable from PET containers using the difference in specific gravity between PET containers and the films.

For controlling these characteristic properties of films, such as strength and shrinkability, multilayer films composed of layers made of different types of resins having different properties are used. Exemplary known multilayer films include films containing two or more different films laminated through an adhesive layer; and coextruded multilayer films. The films laminated through an adhesive layer, however, have a low maximum shrinkage due to the presence of the adhesive layer, and labels made of these films are unsuitable for fitting to portions or shapes in adherends where a high degree of shrinkage is required in order to give a beautiful finish. This confines the covering ranges of the labels within narrow limits or confines the shapes typically of containers to which the labels are to fit within narrow limits.

On the other hand, exemplary known coextruded multilayer films without using an adhesive layer include a heat-shrinkable label composed of a multilayer film of an amorphous resinous layer and an olefin resinous layer (see, for example, Patent Document 1); and a heat-shrinkable label composed of a multilayer film of a polyester resinous layer and a styrene resinous layer (see, for example, Patent Document 2). However, the former is insufficient particularly in interlayer strength and is liable to delaminate at a crease or sealing portion when used as a label. The latter is insufficient in flexibility and is liable to crack when used as a label.

   [Patent Document 1] Japanese Unexamined Patent Application Publication (JP-A) No. 2000-159946
   [Patent Document 2] Japanese Unexamined Patent Application Publication (JP-A) No. Hei 07-137212

WO-A-01/00716 relates to essentially amorphous, non-chlorinated polymeric films and the use of such films as effective barriers to odors and organic molecules.

JP-A-11262981 discloses a multilayer shrink film comprising a core layer made of a polyolefin resin, and laminating non-polyolefin resin layers on both sides of the core layer via adhesive resin layers.

WO-A-2004/058499 relates to a multilayer polymer composition having a polar outer layer and a non-polar second outer layer, wherein the polar outer layer is preferably PVC and the non-polar outer layer is polypropylene.

JP-A-06071828 relates to a multilayer plastic vessel, comprising a polyester resin as the outermost layer resin, a polypropylene resin as the innermost layer resin, and an adhesive resin interposed as an intermediate layer for bonding them.

JP-A-11115229 discloses a multilayer shrink film comprising a core layer comprising poly(trimethylene terephthalate) and two outer layers comprising at least one type of polymer selected from the group consisting of polyethylene polymer, ion-crosslinkable copolymers, block or random copolymers and its derivative of vinyl aromatic hydrocarbon and conjugated diene derivatives.

JP-A-2005/201987 discloses a stretch-shrink label which has a high stiffness and gloss, and is excellent in natural shrinkage resistance comprising a base film configured by a center layer and surface layers, which are composed of amorphous cyclic olefinic polymers and linear low-density polyethylene.

JP-A-05261873 relates to a polyamide type heat-shrinkage multilayer film for tray container package comprising a polyamide layer, a modified polyolefin adhesive layer and a polyolefinic resin layer in this order to be adjacent to each other.

Problems to be Solved by the Invention

Accordingly, an object of the present invention is to provide a shrink film which is a multilayer film of a polyester resin and a polyolefin resin, has a relatively low specific gravity and excellent shrink properties, further exhibits excellent interlayer strength, toughness, and is excellent for use as labels.

Means for Solving the Problems

After intensive investigations to achieve the above object, the present inventor has found that there are provided excellent shrink films that have a high interlayer strength between film layers and have satisfactory toughness while having a low specific gravity and high shrinkability, by using films having a specific resin composition and a specific multilayer structure. The present invention has been made based on these findings.

Specifically, the present invention provides, in an embodiment, a shrink film which includes a core layer; two plies of intermediate layer respectively arranged on both sides of the core layer; and two plies of surface layer respectively arranged on both outer sides of the intermediate layers, and has a five-layered multilayer structure composed of three types of layers [(surface layer)/(intermediate layer)/(core layer)/(intermediate layer)/(surface layer)], in which the core layer is a resinous layer mainly containing a polyolefin resin, the surface layer is a resinous layer mainly containing a polyester resin, and the intermediate layer is a resinous layer mainly containing a polyethylene resin containing a glycidyl methacrylate (GMA) component, which has a GMA content of 4 to 15 percent by weight, wherein the polyolefin resin has a melting point of 100°C to 150°C and a density of 0.80 to 0.95 g/cm$^3$.

Preferred embodiments are set forth in the subclaims.

Advantages

The shrink films according to the present invention are, after being used as labels, separable and recoverable from containers made typically of poly(ethylene terephthalate)s, by using the difference in specific gravity, and are suitable for recycling, because they have a low specific gravity. They give a beautiful finish even when they are attached to containers having complicated shapes, because they have a high shrinkage (shrinkage percentage) and an adequate shrinking speed. In addition, they are unlikely to undergo problems due to delamination during production processes or in the market, because they have a high interlayer strength between constitutive film layers. Furthermore, they are free from troubles such as buckling upon fitting and are resistant to reduction in productivity due to occurrence of defective pieces upon processing even when the resulting labels have a small thickness, because the films are satisfactory tough. Accordingly, the films are useful particularly as labels for use typically in PET bottles.

Brief Description of Drawings

[Fig. 1] Fig. 1 is a schematic cross-sectional view of an exemplary shrink label (a five-layered multilayer structure composed of three types of layers) as an embodiment of the present invention.

[Fig. 2] Fig. 2 is a schematic cross-sectional view of an exemplary shrink label (seven-layered multilayer structure composed of four types of layers) as another embodiment of the present invention.

Reference Numerals

1 shrink film (with a five-layered multilayer structure composed of three types of layers)
2 core layer
3 intermediate layer
4 surface layer
5 shrink film (with a seven-layered multilayer structure composed of four types of layers)
6 core layer
7 intermediate layer A
8 intermediate layer B
9 surface layer

Best Modes for Carrying Out the Invention

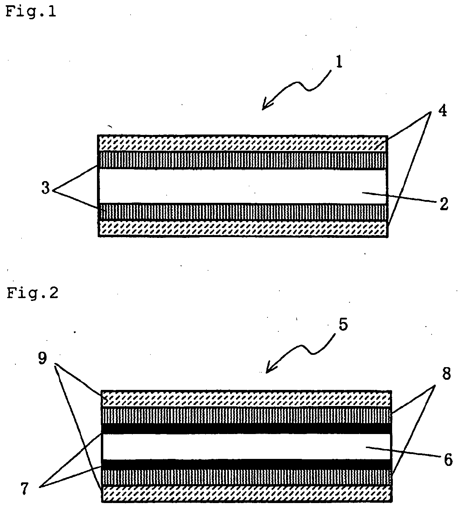

Some embodiments of the present invention will be illustrated below with reference to the attached drawings. Fig. 1 is a schematic cross-sectional view of an exemplary shrink film (with a five-layered multilayer structure composed of three types of layers) as claimed in claim 1. The shrink film 1 includes a total of five film layers. Specifically, it includes a core layer 2; two plies of intermediate layer 3 respectively arranged on both sides of the core layer 2; and two plies of surface layer 4 respectively arranged on both outer sides of the intermediate layer 3.

Fig. 2 is a schematic cross-sectional view showing an exemplary shrink film (a seven-layered multilayer structure composed of four types of layers) as claimed in claim 2. The shrink film 5 in Fig. 2 includes a total of seven film layers. Specifically, it includes a core layer 6; two plies of intermediate layer A 7 respectively arranged on both sides of the core layer 6; two plies of intermediate layer B 8 respectively arranged on both outer sides of the intermediate layer A 7; and two plies of surface layer 9 respectively arranged on both outer sides of the intermediate layer B 8.

Shrink films according to embodiments of the present invention are each a film which includes a core layer; two plies of intermediate layer respectively arranged on both sides of the core layer; and two plies of surface layer respectively arranged on both outer sides of the intermediate layer, and which has a five-layered multilayer structure composed of three types of layers [(surface layer)/(intermediate layer)/(core layer)/(intermediate layer)/(surface layer)], or a film which includes a core layer; two plies of intermediate layer A respectively arranged on both sides of the core layer; two plies of intermediate layer B respectively arranged on both outer sides of the intermediate layer A; and two plies of surface layer respectively arranged on both outer sides of the intermediate layer B, and which has a seven-layered multilayer structure composed of four types of layers [(surface layer)/(intermediate layer B)/(intermediate layer A)/(core layer)/(intermediate layer A)/(intermediate layer B)/(surface layer)]. As used herein a "core layer", an "intermediate layer", an "intermediate layer A", an "intermediate layer B", and a "surface layer" each refer to a single film layer (resinous layer).

In an embodiment of the present invention, a shrink film is a film with a five-layered multilayer structure composed of three types of layers. In this embodiment, the core layer is a film layer mainly containing a polyolefin resin, the surface layer is a film layer mainly containing a polyester resin, and the intermediate layer is a film layer mainly containing a polyethylene resin containing a glycidyl methacrylate (GMA) component. The core layer serves to allow the shrink film to have a low specific gravity. Additionally, it serves to suppress abrupt shrinkage of the shrink film and to moderate the shrinkage behavior thereof. The surface layer serves to improve the shrinkability of the shrink film. It also imparts abrasion resistance and chemical resistance to surfaces of the shrink film. The intermediate layer shows satisfactory adhesion to both the core layer and the surface layer and thereby serves to improve the interlayer strength of the shrink film. The intermediate layer also has a high flexural rigidity and serves to impart "toughness" to the shrink film. These functions or roles are purely main functions of the respective film layers, and each film layer alone does not exhibit the functions but is affected by other film layers to some extent to exhibit the functions. In this connection, a film with a three-layered structure composed of two types of layers which includes only a core layer made of a polyolefin resin and a surface layer made of a polyester resin has an insufficient interlayer strength and is liable to suffer from interlayer delamination typically at a "crease" or a sealing portion of the film. Another film with a three-layered structure composed of two types of layers which includes only a core layer made of a polyethylene resin containing a GMA component and a surface layer made of a polyester resin is expensive, has insufficient shrinkability and transparency, and thereby shows a poor finish quality.

In another embodiment of the present invention, a shrink film is a film with a seven-layered multilayer structure composed of four types of layers. In this embodiment, the surface layer and the intermediate layer B are film layers as with the surface layer and the intermediate layer, respectively, in the film with a five-layered multilayer structure composed of three types of layers. The core layer and the intermediate layer A both mainly contain a polyolefin resin and help to allow the shrink film to have a low specific gravity. Additionally, they help to suppress abrupt shrinkage of the shrink film and to moderate the shrinkage behavior thereof.

The respective film layers of the shrink films according to the present invention may be laminated or stacked by coextrusion without the interposition of an adhesive. Such lamination by coextrusion helps the polyethylene resin containing a glycidyl methacrylate (GMA) component to exhibit improved interlayer strength effectively. Additionally, the lamination by coextrusion helps to stretch and orient all the film layers effectively to thereby give shrink films excellent in shrink properties.

The core layer (in the five-layered multilayer structure composed of three types of layers and seven-layered multilayer structure composed of four types of layers) and the intermediate layer A in the seven-layered multilayer structure composed of four types of layers each mainly contain a polyolefin resin. Exemplary polyolefin resins include, but are not limited to, homopolymers such as polyethylenes (PEs), polypropylenes (PPs), polybutylenes, and polymethylpentenes (PMPs); random copolymers such as ethylene-$\alpha$-olefin random copolymers and propylene-$\alpha$-olefin random copolymers; and amorphous (noncrystalline) cyclic olefin polymers such as copolymers between a cyclic olefin and an $\alpha$-olefin (e.g., ethylene or propylene) and graft-modified derivatives thereof, ring-opened polymers of cyclic olefins and hydrogenated products thereof, and graft-modified products of them. Among them, preferred from the viewpoints of their low specific gravity and satisfactory flexibility are polyethylenes such as low-density polyethylenes (LDPEs), linear low-density polyethylenes (LLDPEs), and metallocene-catalyzed LLDPEs (mLLDPEs); as well as polypropylenes and propylene random copolymers such as propylene-α-olefin copolymers, of which propylene random copolymers are more preferred. Each of different polyolefin resins may be used alone or in combination.

Exemplary α-olefins for use as a copolymerizable component (comonomer) in the propylene-α-olefin copolymers include ethylene; and α-olefins having about four to twenty carbon atoms, such as 1-butene, 1-pentene, 4-methyl-1-pentene, 1-hexene, 1-heptene, 1-octene, 1-nonene, and 1-decene. Each of different copolymerizable components may be used alone or in combination.

Among the propylene-α-olefin copolymers, preferred are ethylene-propylene random copolymers which contain ethylene as a copolymerizable component. In the ethylene-propylene random copolymers, the ratio of ethylene to propylene is, in terms of weight ratio, for example about 2:98 to 5:95, and preferably about 3:97 to 4.5:95.5. Specifically, the content of ethylene component in the ethylene-propylene random copolymers may be selected within ranges of, for example, about 2 to 5 percent by weight, and preferably about 3 to 4.5 percent by weight, based on the total weight of monomer components.

Among the ethylene-propylene random copolymers, preferred are metallocene-catalyzed copolymers for the improvements in shrinkability at low temperatures of about 60°C to 80°C and in fitting ability to containers upon heat shrinkage. Those having an isotactic index of 90% or more are also preferred, from the viewpoints of low-temperature shrinkability and toughness of the shrink film. Exemplary metallocene catalysts include known or common metallocene catalysts for the polymerization of olefins. The way to carry out copolymerization is not particularly limited, and any known polymerization technique such as slurry polymerization, solution polymerization, or vapor-phase polymerization may be employed.

Such polyolefin resins are commercially available as "NOVATEC" and "WINTEC" from Japan Polypropylene Corporation; and as "KERNEL" from Japan Polyethylene Corporation.

Polyolefin resins for use in the core layer herein have a melting point of 100°C to 150°C, and preferably 120°C to 140°C, and a melt flow rate (MFR) of 0.1 to 10 (g/10 min.), and more preferably 1 to 5 (g/10 min.). A polyolefin resin having a melting point and/or a melt flow rate out of the above-specified ranges should be processed under conditions much different from those of a polyester resin. This may impede coextrusion with the polyester resin into a sheet and subsequent drawing and may cause poor productivity due typically to film breakage or cause insufficient shrinkability due to insufficient orientation.

Polyolefin resins for use in the core layer have a density of 0.80 to 0.95 g/cm$^3$, and preferably 0.88 to 0.92 g/cm$^3$. As used herein the term "density" refers to a density of a resin as determined after melting and quenching the resin (namely, a density in an amorphous state). A polyolefin resin having a density of more than 0.95 g/cm$^3$ may not help to allow the entire shrink film to have a low specific gravity, and this may impede separation and recovering of the shrink film from containers.

The core layer herein preferably has a polyolefin resin content of 70 percent by weight or more.

The above explanations with respect to the core layer are also applicable to the intermediate layer A.

The core layer in the shrink films (those with a five-layered multilayer structure composed of three types of layers and those with a seven-layered multilayer structure composed of four types of layers) may further contain tackifiers such as petroleum resins and terpene resins, so as to exhibit high shrinkability, to exhibit low-temperature shrinkability and toughness, and to prevent natural contraction (spontaneous shrinkage). Exemplary tackifiers include rosin resins such as rosins, polymerized rosins, hydrogenated rosins, and derivatives of them, and resin-acid dimers; terpene resins such as terpene resins, aromatic modified terpene resins, hydrogenated terpene resins, and terpene-phenol resins; and petroleum resins such as aliphatic, aromatic, or alicyclic petroleum resins. Among them, petroleum resins are preferred. Each of different tackifiers may be used alone or in combination. The amount of tackifiers, if added, is preferably 30 percent by weight or less (e.g., 10 to 30 percent by weight) based on the total weight of the core layer. Tackifiers in an amount of more than 30 percent by weight may cause excessively increased cost and poor cost effectiveness or may cause the shrink film to be brittle. Tackifiers in an amount of less than 10 percent by weight may not exhibit sufficient advantageous effects. The way to add tackifiers is not particularly limited, and compounding by dry blending or kneading is often employed. As the tackifiers, commercial products such as "ARKON" supplied by Arakawa Chemical Industries, Ltd. are available.

The intermediate layer A in a shrink film with a seven-layered multilayer structure composed of four types of layers may also contain tackifiers, as with above. The amount of tackifiers is not particularly limited, but is preferably, for example, about 0 to 20 percent by weight based on the total weight of the intermediate layer A. However, the amounts of tackifiers in the core layer and the intermediate layer A in a shrink film with a seven-layered multilayer structure composed of four types of layers are not limited to the above-specified amounts and can be set as appropriate according to desired film properties. Typically, when the core layer does not contain tackifiers, the intermediate layer A may contain a lager amount (e.g., 30 percent by weight) of tackifiers. In general, it is desirable to incorporate tackifiers mainly to the core layer.

The intermediate layer and the core layer in the shrink films (five-layered multilayer structure composed of three types of layers) according to the present invention may contain recycled materials from the viewpoints of lower cost and reduction of industrial wastes. As used herein the term "recycled materials" refers to recycled materials that are prepared typically by flaking or granulation of non-product polymer wastes such as residual portions from which product films have been cut, and film edges; residual portions of intermediate products from which product films have been cut; and nonstandard products. It should be noted, however, the recycled materials should be those formed in the production of shrink films according to the present invention. The intermediate layer, if containing recycled materials, contains a polyester resin constituting the surface layer; and a polyolefin resin containing, a tackifier and constituting the core layer. The core layer, if containing recycled materials, contains a polyester resin constituting the surface layer; and a resin containing a GMA component and constituting the intermediate layer. In this case, the amount of recycled materials, if contained in the intermediate layer, is preferably 20 to 60 percent by weight based on the total weight of the intermediate layer, from the viewpoint of interlayer strength. The amount of recycled materials, if contained in the core layer, is preferably 10 to 40 percent by weight based on the total weight of the core layer, from the viewpoint typically of transparency. These are applicable to a shrink film having a seven-layered multilayer structure composed of four types of layers, while the "intermediate layer" is read as the "intermediate layer B", and the "core layer" is read as the "core layer and intermediate layer A".

The surface layer herein mainly contains a polyester resin. Polyester resins for use in the surface layer include a variety of polyesters each composed of at least one dicarboxylic.acid component and at least one diol component. Exemplary dicarboxylic acid components include aromatic dicarboxylic acids such as terephthalic acid, isophthalic acid, phthalic acid, 5-t-butylisophthalic acid, 4,4'-biphenyldicarboxylic acid, trans-3,3'-stilbenedicarboxylic acid, trans-4,4'-stilbenedicarboxylic acid, 4,4'-dibenzyldicarboxylic acid, 1,4-naphthalenedicarboxylic acid, 1,5-naphthalenedicarboxylic acid, 2,3-naphthalenedicarboxylic acid, 2,6-naphthalenedicarboxylic acid, 2,7-naphthalenedicarboxylic acid, 2,2,6,6-tetramethylbiphenyl-4,4'-dicarboxylic acid, 1,1,3-trimethyl-3-phenylindene-4,5-dicarboxylic acid, 1,2-diphenoxyethane-4,4'-dicarboxylic acid, diphenyl ether dicarboxylic acid, and substituted derivatives of them; aliphatic dicarboxylic acids such as oxalic acid, malonic acid, succinic acid, glutaric acid, adipic acid, pimelic acid, suberic acid, azelaic acid, sebacic aid, undecanedioic acid, dodecanedioic acid, tridecanedioic acid, tetradecanedioic acid, pentadecanedioic acid, heptadecanedioic acid, octadecanedioic acid, nonadecanedioic acid, icosanedioic acid, docosanedioic acid, 1,12-dodecanedioic acid, and substituted derivatives of them; and alicyclic dicarboxylic acids such as 1,4-decahydronaphthalenedicarboxylic acid, 1,5-decahydronaphthalenedicarboxylic acid, 2,6-decahydronaphthalenedicarboxylic acid, cis-1,4-cyclohexanedicarboxylic acid, trans-1,4-cyclohexanedicarboxylic acid, 1,3-cyclohexanedicarboxylic acid, and substituted derivatives of them. Each of different dicarboxylic acid components may be used alone or in combination.

Exemplary diol components include aliphatic diols such as ethylene glycol, diethylene glycol, 1,2-propanediol, 1,3-propanediol, 1,3-butanediol, 1,4-butanediol, 1,5-pentanediol, 2,2-dimethyl-1,3-propanediol, 1,6-hexanediol, 2-ethyl-2-methyl-1,3-propanediol, 2,2-diethyl-1,3-propanediol, 1,8-octanediol, 2-ethyl-2-butyl-1,3-propanediol, 2-ethyl-2,4-dimethyl-1,3-hexanediol, 1,10-decanediol, polyethylene glycol, and polypropylene glycol; alicyclic diols such as 1,2-cyclohexanedimethanol, 1,3-cyclohexanedimethanol, 1,4-cyclohexanedimethanol, and 2,2,4,4-tetramethyl-1,3-cyclobutanediol; and aromatic diols such as ethylene oxide adducts of bisphenol compounds such as 2,2-bis(4'-β-hydroxyethoxydiphenyl)propane and bis(4'-β-hydroxyethoxyphenyl)sulfone, and xylylene glycol. Each of different diol components may be used alone or in combination.

The polyester resins may further contain other constitutional units than the above-listed components. Exemplary other constitutional units include hydroxycarboxylic acids such as p-hydroxybenzoic acid and p-hydrooxyethoxybenzoic acid; monocarboxylic acids such as benzoic acid and benzoylbenzoic acid; polycarboxylic acids such as trimellitic acid; monohydric alcohols such as polyalkylene glycol monomethyl ethers; and polyhydric alcohols such as glycerol, pentaerythritol, and trimethylolpropane .

Polyester resins for use in the surface layer are not particularly limited. Among such polyester resins, preferred from the viewpoints typically of cost and productivity are poly(ethylene terephthalate)s (PETs) using terephthalic acid as a dicarboxylic acid component, and ethylene glycol as a diol component; and copolyesters using terephthalic acid as a dicarboxylic acid component, and ethylene glycol as a main diol component in combination with 1,4-cyclohexanedimethanol (CHDM) as a copolymerizable diol component (hereinafter referred to as "CHDM-copoly-PETs"). These copolyesters may further contain diethylene glycol as a copolymerizable component, from the viewpoint of improvements in low-temperature shrinkability. In the copolyesters, the amount of CHDM as a copolymerizable component is preferably 10 to 40 percent by mole, and more preferably 20 to 30 percent by mole, and the amount of diethylene glycol is preferably 20 percent by mole or less, to ethylene glycol. Copolymerization with CHDM helps polyester resins to be more amorphous. In general, polyester resins tend to have increasing interlayer adhesion and interlayer strength with being more amorphous, and they tend to have increasing chemical resistance and thermal stability as being crystalline or semi-crystalline. Common shrink films having a three-layered structure composed of two types of layers including a polyolefin resin and a polyester resin should use an amorphous polyester resin so as to obtain a certain interlayer strength. In contrast, crystalline or semicrystalline polyester resins can be used in the present invention, because the intermediate layer helps to exhibit sufficient interlayer strength.

The intrinsic viscosity (IV) of polyester resins for use herein is preferably 0.5 to 0.9 (dl/g), and more preferably 0.7 to 0.8 (dl/g), from the viewpoint of shrinkability (shrinkage suitability). The glass transition temperature (Tg) thereof is preferably 50°C to 100°C, and more preferably 60°C to 80°C, from the viewpoint of shrinkability.

Such polyester resins may also be existing products. Typically, PETs are commercially available as "NOVAPEX" from Mitsubishi Chemical Corporation, and CHDM-copoly-PETs are commercially available as "Eastar Copolyester" and "Embrace" from Eastman Chemical Company.

The content of polyester resins in the surface layer is preferably 95 percent by weight or more.

The intermediate layer (in shrink films with a five-layered multilayer structure composed of three types of layers) and the intermediate layer B (in shrink films with a seven-layered multilayer structure composed of four types of layers) for use herein each mainly contains a polyethylene resin containing a glycidyl methacrylate (GMA) component. Exemplary polyethylene resins containing a glycidyl methacrylate (GMA) component include (1) block or random copolymers between ethylene and glycidyl methacrylate (GMA) (hereinafter referred to as "EGMAs"), and (2) mixtures or blends of a polyethylene resin with a GMA-containing resin (homopolymer or copolymer) or with an EGMA. Among them, EGMAs and mixtures of EGMAs with polyethylene resins are preferred, of which EGMAs are more preferred.

The polyethylene resins having a GMA component act to improve interlayer strength and toughness of shrink films, because their polyethylene component helps to have higher affinity to the polyolefin resin in the core layer, and their glycidyl moiety in the GMA component interacts with the ester bond moiety of the polyester resin in the surface layer to thereby improve adhesion to the surface layer. Among them, EGMAs are more preferred, because they are relatively inexpensive and do not adversely affect transparency and shrinkage of shrink films.

The GMA-containing resins may be homopolymers of glycidyl methacrylate or copolymers thereof with one or more other copolymerizable components. Exemplary copolymerizable components include, but are not limited to, methyl acrylate, ethyl acrylate, isopropyl acrylate, n-butyl acrylate, 2-ethylhexyl acrylate, methyl methacrylate, ethyl methacrylate, isopropyl methacrylate, n-butyl methacrylate, isobutyl methacrylate, n-hexyl methacrylate, lauryl methacrylate, acrylic acid, methacrylic acid, maleic acid, itaconic acid, 2-hydroxyethyl methacrylate, hydroxypropyl methacrylate, 2-hydroxyethyl acrylate, hydroxypropyl acrylate, acrylamide, N-methylolacrylamide, diacetoneacrylamide, styrene, vinyltoluene, vinyl acetate, and acrylonitrile. Among them, methyl acrylate and ethyl acrylate are preferred. Each of different copolymerizable components may be used alone or in combination.

The poly(ethylene-co-glycidyl methacrylate)s (EGMAs) are random copolymers or block copolymers of ethylene and glycidyl methacrylate. They may further contain other copolymerizable components, and exemplary copolymerizable components herein include the components as mentioned in the precedent paragraph. The EGMAs may be prepared according to a common procedure such as free-radical polymerization of the monomer components under normal pressure. Existing products are also used herein and they are commercially available typically as "Bondfast" from Sumitomo Chemical Co., Ltd.

Polyethylene resins for use in mixtures of polyethylene resins with GMA-containing resins and those with EGMAs, or for use in copolymers of polyethylene resins with GMA are ethylene homopolymers or ethylene copolymers with an $\alpha$-olefin ($\alpha$-olefin having about four to twenty carbon atoms, such as 1-butene, 1-pentene, 4-methyl-1-pentene, 1-hexene, 1-heptene, 1-octene, 1-nonene, or 1-decene) and include, but are not limited to, common polyethylene resins such as high-density polyethylenes (HDPEs), low-density polyethylenes (LDPEs), linear low-density polyethylenes (LLDPEs), and metallocene-catalyzed LLDPEs (mLLDPEs).

The melt flow rate (MFR) of the polyethylene resins is preferably 0.1 to 5 (g/10 min.) from the viewpoint of drawing suitability.

The GMA content in the polyethylene resins containing a GMA component is 4 to 15 percent by weight, and preferably 5 to 12 percent by weight. A polyethylene resin having a GMA content of less than 4 percent by weight may not sufficiently help to improve the interlayer strength, and one having a GMA content of more than 15 percent by weight may have a too low viscosity to be drawn and oriented sufficiently, and the resulting film may have insufficient shrink properties.

The thickness of the shrink films is preferably 10 to 80 $\mu$m, and more preferably 20 to 50 $\mu$m.

The thickness of the surface layer (as a single ply) in the shrink films is preferably 1 to 10 $\mu$m, and more preferably 2 to 5 $\mu$m. A surface layer having a thickness of more than 10 $\mu$m may not help to control the shrink film to have a low specific gravity, and the resulting shrink film may shrink abruptly and thereby have insufficient processability. In contrast, one having a thickness of less than 1 $\mu$m may not help to provide a shrink film having a sufficiently high shrinkability and satisfactory finish; and additionally, the layer may not be uniformly laminated and the resulting shrink film may thereby have insufficient abrasion resistance and chemical resistance in surface.

The thickness (as a single ply) of the intermediate layer (in shrink films with a five-layered multilayer structure composed of three types of layers) and intermediate layer B (in shrink films with a seven-layered multilayer structure composed of four types of layers) is preferably 1 to 10 $\mu$m, and more preferably 2 to 5 $\mu$m. An intermediate layer B having a thickness of more than 10 μm may adversely affect the shrinkage and transparency of shrink films. One having a thickness of less than 1 μm may not be uniformly laminated, and this may cause partially insufficient interlayer strength.

In the shrink films, if having a five-layered multilayer structure composed of three types of layers, the thickness of the core layer is preferably 5 to 50 μm, and more preferably 10 to 30 μm. A core layer having a thickness of more than 50 μm may adversely affect shrinkability to cause poor finish quality. One having a thickness of less than 5 μm may not sufficiently help to control the shrink film to have a low specific gravity.

In the shrink films, if having a seven-layered multilayer structure composed of four types of layers, the total thickness of the core layer and intermediate layer A ((intermediate layer A)/(core layer)/(intermediate layer A)) is as with the thickness of the core layer in the shrink films having a five-layered multilayer structure composed of three types of layers.

In the shrink films, if having a five-layered multilayer structure composed of three types of layers, the thickness of the intermediate layer (as a single layer) is preferably 1 to 0.1, and more preferably 0.5 to 0.2; and the thickness of the surface layer (as a single ply) is preferably 1 to 0.1, and more preferably 0.5 to 0.2, both assuming that the thickness of the core layer being 1. A shrink film, if having a ratio in thickness of the surface layer to the core layer of smaller than the above-specified range, may have an insufficient shrinkage. A shrink film, if having a ratio in thickness of the surface layer to the core layer of greater than the above-specified range, may have an excessively high specific gravity and the resulting label may not be satisfactorily separated and recovered from containers by using the difference in specific gravity. A shrink film, if having a ratio in thickness of the intermediate layer to the core layer of smaller than the above-specified range, may have insufficient toughness and may often undergo buckling typically during processing. A shrink film, if having a ratio in thickness of the intermediate layer to the core layer of greater than the above-specified range, may have insufficient transparency or may be excessively expensive.

In the shrink films, if having a seven-layered multilayer structure composed of four types of layers, the above conditions regarding ratios in thickness are preferably satisfied in the ratio of the thickness of the surface layer to the total thickness of the core layer and the intermediate layer A [(intermediate layer A)/(core layer)/(intermediate layer A)] and in the ratio of the thickness of the intermediate layer B to the total thickness of the core layer and the intermediate layer A, respectively.

The two plies of each film layer (the surface layer, intermediate layer, intermediate layer A, or intermediate layer B) in the shrink films may have different thicknesses from each other, as long as the thicknesses are both within the above specified range, but they preferably have an identical thickness. If two plies of the layer have largely different thicknesses, problems such as "warpage" and "wrinkles" may occur during shrinking process or storage.

The shrink films are preferably oriented in at least one direction. A shrink film, if including all the layers being unoriented, may not sufficiently provide the advantageous effects typically in shrink properties, rigidity, and interlayer strength. Specifically, uniaxially or biaxially oriented films which have been oriented in a longitudinal direction (a film machine direction) and/or cross direction (width direction) (a direction perpendicular to the longitudinal direction) are preferred, of which films highly oriented in a film cross direction (a direction to be a circumferential direction of a label when the label is rolled into a cylinder) are generally used. Specifically, films that have been substantially uniaxially oriented in a cross direction are more preferred. In the shrink films, it is desirable that all the film layers are oriented, from the viewpoint of yielding excellent shrink properties.

The respective film layers in the shrink films may further contain additives within ranges not adversely affecting the advantageous effects of the present invention. Exemplary additives include pigments, dyestuffs, lubricants, antiblocking agents (e.g., inorganic particles), antioxidants, ultraviolet-absorbers, deodorants, flame retardants, and stabilizers. The amount of such additives is preferably 10 percent by weight or less to the weight of a film layer to which the additives are to be contained.

The specific gravity of the shrink films is preferably 0.8 to 1.20, and more preferably 0.9 to 1.1, for satisfactorily separating and recovering the resulting labels from containers using difference in specific gravity.

The interlayer strength of the shrink films is preferably 1.0 (N/15 mm) or more, and more preferably 2.0 (N/15 mm) or more. A shrink film having an interlayer strength of less than 1.0 (N/15 mm) may suffer from delamination between film layers during processing or after production and may thereby lead to insufficient productivity or complaints.

The compressive strength of the shrink films is preferably 2 N or more, more preferably 3.5 N or more, and further preferably 5 N or more when measured at a film thickness of 40 μm according to Japanese Industrial Standards (JIS) P 8126. A shrink film, if having a compressive strength of less than 2 N may have insufficient toughness, and a shrink label after being rolled into a cylinder may often suffer from buckling during fitting to a container.

The thermal shrinkage (heat shrinkage percentage) of the shrink films in a main orientation direction (a direction to which drawing is mainly applied)is preferably 15% or more, more preferably 25% or more, and further preferably 30% to 80% in a treatment with hot water at 90°C for 10 seconds. A shrink film, if having a thermal shrinkage of less than 15%, may not sufficiently shrink in a process of thermally fitting the shrink label to a container, may thereby follow the shape of the container unsatisfactorily to show a poor finish when attached typically to a container having a complicated shape.

The storage stability (natural contraction: shrinkage upon elapse of 30 days at 30°C) of the shrink films is preferably less than 2%, more preferably less than 1.5%, and further preferably less than 1%. A shrink film, if having a natural contraction of 2% or more, may suffer from large deformation (shrinkage) during storage after production and before processing of the shrink label, and this may impede the subsequent processing, and may cause insufficient productivity, fitting failures typically to a container to thereby cause complaints.

The transparency (haze: JIS K 7105) (in units of %) of the shrink films, if used in applications where transparency is required, is preferably less than 10, more preferably less than 5.0, and further preferably less than 2.0. A shrink film, if having a haze of 10 or more, may show a hazed print and have poor decorativeness when a print is applied to an inner side thereof (a side that faces a container when the label is attached to the container) and the applied print is to be seen through the film.

The shrink films, when processed into shrink labels, may further bear, on their surfaces, other layers such as printed layers, coating layers, resinous layers, anchor coat layers, primer coat layers, adhesive layers, adhesive resin layers, and heat-sensitive adhesive layers, and/or may further include layers typically of nonwoven fabrics, paper, and plastics according to necessity.

A printed layer, if provided, is a layer indicating, for example, trade names (product names), illustrations, and/or precautions and may be prepared according to a common printing technique such as gravure printing or flexographic printing. Printing inks for use in the formation of a printed layer are composed typically of pigments, binder resins, and solvents. Exemplary binder resins include regular resins such as acrylic resins, urethane resins, polyamide resins, vinyl chloride-vinyl acetate copolymers, cellulosic resins, and nitrocellulose resins. A printed layer, if provided, is preferably arranged on either one surface of the shrink film, and is more preferably arranged on a side to be the inner side when attached to a container (i.e., a side facing the container). This protects the printed layer from delamination and stains during circulation in the market. The thickness of the printed layer may be, but not limited to, about 0.1 to 10 $\mu$m.

Labeled containers are available by affixing shrink labels using the shrink films to containers. Exemplary containers herein include soft drink bottles such as PET bottles; home-delivered milk containers; containers for foodstuffs such as seasonings; alcoholic drink bottles; containers for pharmaceutical preparations; containers for chemicals such as detergents and aerosols (sprays); and pot noodle containers. Such containers may have a variety of shapes and may be, for example, cylindrical or rectangular bottles, and cups. Exemplary materials for the containers include plastics such as PETs; glass; and metals. It should be noted, however, the shrink labels according to the present invention may also be applied to other adherends than containers.

In labeled containers using the shrink films, the labels can be separated and recovered from the containers after use, by using the difference in specific gravity between them. Specifically, the shrink films have a low specific gravity (for example, a specific gravity of 0.8 to 1.20), and when they are attached as shrink labels to poly(ethylene terephthalate) bottles and used, their plastic components are easily separated from poly(ethylene terephthalate) components of the bottles upon recycling.

The ways to prepare shrink films according to the present invention, and shrink labels and labeled containers using the shrink films will be illustrated below. In the following illustrations, a shrink film having a five-layered multilayer structure composed of three types of layers and using EGMA as a resin in the intermediate layer will be taken as an example. However, the ways to prepare these are not limited thereto.

In the following illustrations, in order of steps, an original film after drawing is referred to as a "shrink film"; a "shrink film" after printing is referred to as a "long shrink label"; and a "long shrink label" which is rolled (formed) into a cylinder while leaving it being long is referred to as "long cylindrical shrink label".

[Shrink Film]

The polyolefin resin, polyester resin, and EGMA in the intermediate layer for use in the shrink films are available by polymerization according to known techniques. These resins are also commercially available.

Next, an unoriented multilayer film (unoriented film) is prepared from the obtained materials. The lamination is conducted by coextrusion herein. When coextrusion is employed, polymers in molten state in the respective layers are in contact with each other at interfaces between laminated layers, thereby highly interact with each other, and thus help to provide high interlayer strengths.

An exemplary coextrusion process using three extruders (referred to as extruders "a", "b", and "c") will be illustrated blow. In this connection, coextrusion may be conducted by using four or five extruders typically to provide intermediate layers and surface layers each having different thicknesses on both sides of a core layer. A polyolefin resin, a polyester resin, and EGMA are respectively fed to the extruders "a", "c", and "b" which are controlled to be predetermined temperatures. The polymers are melted, extruded from the three extruders, converged into a multilayer structure of c/b/a/b/c with a junction block (converging block) such as a manifold or feed block, extruded typically from a T-die or circular die, and quenched typically with a cooling drum, to give an unoriented multilayer film. In this process, feeding amounts of the polymers may be adjusted with gear pumps according to necessity. Additionally, it is desirable to remove foreign matter using a filter, to suppress film breakage. Additives such as lubricants, antistatic agents, anti-fogging agents, and antioxidants may be added to these materials according to necessity.

The obtained unoriented multilayer film has an interlayer strength of preferably 2 (N/30 mm) or more, and more preferably 5 (N/30 mm) or more. An unoriented multilayer film having an interlayer strength of less than 2 (N/30 mm) may give a shrink film having an excessively low interlayer strength, and this may cause delamination at a crease or sealing portion upon processing or after production and lead to insufficient productivity or cause complaints.

Next, the prepared unoriented multilayer film is drawn to give a long shrink film. The drawing may be biaxial drawing in a longitudinal direction (machine direction; MD) and a cross direction (transverse direction; TD) or uniaxial drawing in a longitudinal or cross direction. The drawing method can be any of a roll method (drawing using a roll), a tenter method (drawing using a tenter), and a tube method. The drawing procedure is often conducted by carrying out drawing at a temperature of about 70°C to 100°C, where necessary, in a longitudinal direction at a draw ratio typically of about 1.01 to 1.5 times, and preferably about 1.05 to 1.3 times, and carrying out another drawing in a cross direction at a draw ratio of about 3 to 6 times, and preferably about 4 to 5.5 times.

Surfaces of the shrink films according to the present invention may be subjected to a common surface treatment such as corona discharge treatment and/or in-line coating.

[Shrink Label]

Next, a printed layer is formed on at least one side of the prepared long shrink film to give a long shrink label, and the long shrink label is rolled into a cylinder to give a long cylindrical shrink label. The procedure herein will be illustrated below.

Initially, the prepared long shrink film is subjected to printing to give a print. The printing technique herein may be a common printing technique, such as gravure printing or flexographic printing. After printing, the long shrink label is slit into a predetermined width, wound into a roll, and thereby yields a long shrink label as a roll.

Next, while being unwound, the roll is formed into a cylinder so that the cross direction of the shrink film stands a circumferential direction of the label and that the printed layer faces inward. Specifically, the long shrink label is formed into a cylinder, and a solvent such as dioxolane or tetrahydrofuran (THF) and/or an adhesive (hereinafter these components are referred to as a "component such as a solvent") is applied in a strip about 2 to 4 mm wide in a longitudinal direction to an inner surface of one lateral end of the label. The label is then rolled into a cylinder so that the portion where the component such as a solvent is applied to overlap the outer surface of the other lateral end of the label at a position of 5 to 10 mm inside from the other lateral end, affixed and adhered (center-sealed). Thus, a long cylindrical shrink label is obtained as a long cylindrical continuous shrink label. It is desirable that no printing is arranged on a portion where the component such as a solvent is to be applied.

When perforations for tearing the label are arranged, perforations with predetermined lengths and intervals (pitches) are formed in a longitudinal direction of the label. The perforations can be arranged according to a common procedure. They can be arranged, for example, by pressing a disk-like blade peripherally having cutting edges and non-cutting portions alternately, or by using laser beams. The step of arranging perforations can be carried out as appropriate in a suitable stage, such as after the printing step, or before or after the step of processing the label to form a cylindrical label.

[Labeled Container]

Finally, the prepared long cylindrical shrink label is cut, attached to a predetermined container, shrunk by heat treatment, and thereby follows and fits the container, to yield a labeled container.

Specifically, the long cylindrical shrink label is fed to an automatic labeling machine (shrink labeler), cut to a required length, fit onto a container filled with a content, subjected to thermal shrinkage typically by allowing the article to pass through a hot-air tunnel or steam tunnel at a predetermined temperature or by heating the article with radial heat such as infrared rays, thereby brought into intimate contact with the container, and thus yields a labeled container. The heat treatment may be carried out, for example, by treating the article with steam at 90°C.

[Techniques for Measuring Properties and Evaluating Advantageous Effects]

(1) Shrinkage (Thermal Shrinkage at 90°C)

A square sample piece was cut out from the prepared shrink film. The sample piece had a length of 100 mm (film longitudinal direction) and a width of 100 mm (film cross direction).

The sample piece was subjected to a heat treatment (under no load) in hot water at 90°C for 10 seconds, sizes in the cross direction of the sample before and after the heat treatment were measured, and a thermal shrinkage was calculated according to the following calculation formula. The average of measurements in five tests was defined as the shrinkage.

A sample having a shrinkage in a main orientation direction of 30% or more was evaluated as having excellent shrink properties ("A"); one having a shrinkage of 25% or more and less than 30% was evaluated as having good shrink properties ("B"); one having a shrinkage of 15% or more and less than 25% was evaluated as having fair shrink properties at usable level ("C"); and one having a shrinkage of less than 15% was evaluated as having poor shrink properties ("D").

$$\text{Shrinkage (\%)} = (L_0 - L_1)/L_0 \times 100$$

$L_0$: Size of the sample (longitudinal direction or cross direction) before the heat treatment
$L_1$: Size of the sample (in the same direction as $L_0$) after the heat treatment

(2) Time-dependent Change (Natural Contraction)

A sample piece having the same size as in (1) was treated in a thermo-hygrostat held at 30°C for 30 days, and a natural contraction was calculated according to the following calculation formula. The measurement herein was conducted only in a cross direction.

A sample having a natural contraction of less than 1.0% was evaluated as having excellent storage stability ("A"); one having a natural contraction of 1.0% or more and less than 1.5% was evaluated as having good storage stability ("B"); one having a natural contraction of 1.5% or more and less than 2.0% was evaluated as having fair storage stability at usable level ("C"); and one having a natural contraction of 2.0% or more was evaluated as having poor storage stability ("D").

$$\text{Natural Contraction (\%)} = (L_2 - L_3)/L_2 \times 100$$

$L_2$: Size of the sample before the treatment
$L_3$: Size of the sample after the treatment

(3) Compressive Strength (Ring Crush Technique)

Compressive strengths were evaluated on shrink films (40 $\mu$m thick) prepared according to Examples and Comparative Examples below.

Specifically, a compressive strength of each of the shrink films was measured as prescribed in JIS P'8126 under the following conditions. The measurement was conducted in a longitudinal direction. A sample having a compressive strength of 5 N or more was evaluated as having excellent compressive strength ("A"); one having a compressive strength of 3.5 N or more and less than 5 N was evaluated as having good compressive strength ("B"); one having a compressive strength of 2 N or more and less than 3.5 N was evaluated as having fair compressive strength at usable level ("C"); and one having a compressive strength of less than 2 N was evaluated as having poor compressive strength ("D").

Measuring Device: Autograph (AGS-50G; capacity of load
cell: 500 N) supplied by Shimadzu Corporation
Sample Size: 15 mm (longitudinal direction) x 152.4 mm (cross direction)
Number of tests: five times

(4) Interlayer Strength (T-Peel) of Unoriented Film

Interlayer strengths were evaluated on unoriented films (300 $\mu$m thick) prepared according to Examples and Comparative Examples. A long strip sample was sampled from each of the unoriented films. The strip sample was 30 mm wide in a longitudinal direction (machine direction) of the shrink film and long in a cross direction of the shrink film. Hereinafter the term "sample cross direction" refers to the longitudinal direction of the shrink film. T-peel tests (as prescribed in JIS K 6854-3) were conducted in which the measurements were carried out in a longitudinal direction of the sample (a cross direction of the shrink film). The weakest interlayer was delaminated from an end of the sample, both delaminated ends were held in chucks, pulled with a tensile tester, and thus T-peel tests were conducted under the following conditions.

The average of peeling loads in peeling lengths (crosshead moved distances) of from 50 mm to 250 mm was defined as an interlayer strength (N/30 mm).

A sample which had such a high interlayer strength that the sample did not undergo interlayer delamination but the substrate was broken in the peel tests was evaluated as having excellent interlayer strength ("A"); one having an interlayer strength of 5 N/30 mm or more was evaluated as having good interlayer strength ("B"); one having an interlayer strength of 2 N/30 mm or more and less than 5 N/30 mm was evaluated as having fair interlayer strength at usable level ("C"); and one having an interlayer strength of less than 2 N/30 mm was evaluated as having poor interlayer strength ("D").

Measuring Device: Autograph (AGS-50G; capacity of load cell: 500 N) supplied by Shimadzu Corporation
Temperature and Humidity: at a temperature of 23±2°C and relative humidity of 50±5%
Initial Chuck Interval: 50 mm
Sample Width: 30 mm
Number of tests: three times
Crosshead Speed: 200 mm/min.

(5) Transparency (Haze)

Transparency (haze) was evaluated on the shrink films (40 $\mu$m thick) prepared according to Examples and Comparative Examples.

Measurements were conducted as prescribed in JIS K 7105. A sample having a haze (in units of %) of less than 2.0 was evaluated as having excellent transparency ("A"); one having a haze of 2.0 or more and less than 5.0 was evaluated as having good transparency ("B"); one having a haze of 5.0 or more and less than 10.0 was evaluated as having fair transparency at usable level ("C"); and one having a haze of 10.0 or more was evaluated as having poor transparency ("D").

Samples having different thicknesses may be evaluated by converting data in terms of film thickness of 40 $\mu$m.

(6) Hot-air Finish Suitability

Each of shrink films prepared according to Examples and Comparative Examples was rolled into a cylinder so that the cross direction (main orientation direction) of the film stood a circumferential direction of the cylinder, center-sealed with tetrahydrofuran (THF), and thereby yielded a long cylindrical shrink label.

The long cylindrical shrink label was fed to an automatic labeler (STS-1936, supplied by Fuji Astec, Inc.), cut into labels while each of the cut labels was attached to a container (500-ml heat-resistant rectangular PET bottle, supplied by Toyo Seikan Kaisha, Ltd.), thermally shrunk by blowing hot air at 200°C thereto, and thereby yielded a labeled container.

A sample (labeled container) showing a beautiful finish with no defective appearance was evaluated as having excellent hot-air finish suitability ("A"); one showing no defective appearance such as a wrinkle or fold was evaluated as having good hot-air finish suitability ("B"); and one showing a defective appearance such as a wrinkle or fold was evaluated as having poor hot-air finish suitability ("D").

(7) Steam Finish Suitability

Each of shrink films prepared according to Examples and Comparative Examples was rolled into a cylinder so that the cross direction (main orientation direction) of the film stood a circumferential direction of the cylinder, center-sealed with tetrahydrofuran (THF), and thereby yielded a long cylindrical shrink label.

The long cylindrical shrink label was fed to an automatic labeler (STS-1936, supplied by Fuji Astec, Inc.), cut into labels while each of the cut labels was attached to a container (500-ml heat-resistant rectangular PET bottle, supplied by Toyo Seikan Kaisha, Ltd.), thermally shrunk in a steam tunnel at an atmosphere temperature of 90°C, and thereby yielded a labeled container.

A sample (labeled container) showing a beautiful finish with no defective appearance was evaluated as having excellent steam finish suitability ("A"); one showing no defective appearance such as a wrinkle or fold was evaluated as having good steam finish suitability ("B"); and one showing a defective appearance such as a wrinkle or fold was evaluated as having poor steam finish suitability ("D").

EXAMPLES

The present invention will be illustrated in further detail with reference to several examples below. Material resins used in Examples and Comparative Examples are shown in Table 1. The multilayer structures and ratios in layer thickness, contents of resins in respective film layers (contents (percent by weight) based on the total weight of the film layer in question), and evaluated properties in Examples and Comparative Examples are shown in Tables 2 to 6.

EXAMPLE 1

A polyolefin resin used for the core layer was 100 percent by weight of a metallocene-catalyzed polypropylene (propylene/ethylene copolymer) ("WINTEC WFX6" supplied by Japan Polypropylene Corporation). A resin used for the intermediate layer was a material mixture of 67 percent by weight of an LDPE ("Sumikathene L405" supplied by Sumitomo Chemical Co., Ltd.) and 33 percent by weight of an EGMA ("Bondfast E" supplied by Sumitomo Chemical Co., Ltd., having a GMA content of 12%). The GMA content in the entire material mixture was 4 percent by weight. A polyester resin used for the surface layer was 100 percent by weight of a CHDM-copoly-PET ("EMBRACE 21214" supplied by Eastman Chemical Company).

Melting and extrusion was conducted using three extruders. Specifically, the material resins for the core layer, intermediate layer, and surface layer were fed to the three extruders, respectively; allowed to converge using a converging block so that the resin for the intermediate layer was positioned on both sides of the resin for the core layer, and that the resin for the surface layer was positioned on both outer sides of the intermediate layer resin; extruded from a T-die (in a slit interval of 1 mm); quenched on a casting drum cooled at 25°C; and thereby yielded a laminated unoriented film (300 μm thick) with a five-layered multilayer structure composed of three types of layers. The ratio in layer thickness of the unoriented film was such that (surface layer)/(intermediate layer)/(core layer)/(intermediate layer)/(surface layer) was 1/1/2/1/1. The prepared unoriented film had a good interlayer strength as in Table 2.

Next, the unoriented film whose thickness had been adjusted was drawn in a longitudinal direction at 85°C at a draw ratio of 1.10 times with a roll drawing machine, then drawn in a cross direction at 95°C at a draw ratio of 5.0 times using a tenter, thereby yielded a biaxially oriented film that shrinks mainly in one direction. In this procedure, a shrink film (oriented film) having a total thickness of 40 μm (ratio in layer thickness: 1/1/2/1/1) was obtained by adjusting the rates of film formation.

The prepared shrink film had good shrinkability, storage stability, compressive strength, interlayer strength, and transparency as in Table 2. The shrink film also showed good finish suitability when subjected to shrinking processes using a hot-air tunnel and a steam tunnel, respectively.

EXAMPLES 2 to 36

A series of unoriented films (300 μm thick) and a series of shrink films each having a total thickness of 40 μm were prepared by the procedure of Example 1, except for varying conditions or parameters such as types and amounts (ratios) of material resins for the respective film layers, the ratio in thickness of film layers, and the GMA content of the intermediate layer, as in Tables 1 to 4.

The prepared unoriented films and shrink films had good shrinkability, storage stability, compressive strength, interlayer strength, and transparency as in Tables 2 to 4. Additionally, the shrink films were subjected to shrinking processes using a hot-air tunnel and a steam tunnel, respectively, to give labeled containers, and the labeled containers showed good finish suitability.

COMPARATIVE EXAMPLE 1

An unoriented film (300 μm thick) and a shrink film (40 μm thick) were prepared by the procedure of Example 1, except that no EGMA was used as the resin for the intermediate layer, as in Tables 1 and 5.

The prepared unoriented film had a poor interlayer strength, and the prepared shrink film had an insufficient compressive strength, showed large natural contraction, and had a poor storage stability, as in Table 5. Additionally, the shrink film was subjected to shrinking processes using a hot-air tunnel and a steam tunnel, respectively, to give labeled containers, and the labeled containers showed poor finish suitability with defective appearances.

COMPARATIVE EXAMPLES 2 to 4

A series of unoriented films (300 μm thick) and a series of shrink films (40 μm thick) were prepared by the procedure of Example 1, except for varying conditions or parameters such as the types and amounts (ratios) of material resins as in Tables 1 and 5.

The prepared unoriented films had poor interlayer strength, and the prepared shrink films were poor in part or all of the characteristic properties such as shrink properties, storage stability, and compressive strehgth, as in Table 5. Additionally, the shrink film prepared in Comparative Example 4 was subjected to shrinking processes using a hot-air tunnel and a steam tunnel, respectively, to give labeled containers, and the labeled containers showed poor finish suitability with defective appearances.

COMPARATIVE EXAMPLES 5 to 8

A series of unoriented films (300 $\mu$m thick) and a series of shrink films (40 $\mu$m thick) each having a three-layered multilayer structure composed of two types of layers were prepared by the procedure of Example 1, except for arranging no intermediate layer and varying conditions or parameters such as the types and amounts (ratios) of material resins as in Tables 1 and 5.

The prepared unoriented films were poor in interlayer strength, and the prepared shrink films were poor in part or all of the characteristic properties such as shrink properties, storage stability, and compressive strength, as in Table 5. Additionally, the shrink films were subjected to shrinking processes using a hot-air tunnel and a steam tunnel, respectively, to give labeled containers, and the labeled containers showed poor finish suitability with defective appearances.

EXAMPLES 37 to 40

A series of unoriented films (300 $\mu$m thick) and a series of shrink films each having a total thickness of 40 $\mu$m were prepared by the procedure of Example 18, except for varying the ratio of material resins for the core layer as in Table 6.

The prepared unoriented films and shrink films had good shrink properties, storage stability, compressive strength, interlayer strength, and transparency, as in Table 6. Additionally, the shrink films were subjected to shrinking processes using a hot-air tunnel and a steam tunnel, respectively, to give labeled containers, and the labeled containers showed good finish suitability.

[Table 1]

(TABLE 1) List of Used Resins

| | | | |
|---|---|---|---|
| Surface layer | Polyester resin | Examples 1-30 and 37-40, Comparative Examples | "EMBRACE 21214" (CHDM-copoly PET) from Eastman Chemical Company |
| | | Examples 31-36 | "DIANITE KF550" (modified PET) from Mitsubishi Rayon Co., Ltd. |
| Intermediate layer | EGMA resin | Examples | "Bondfast E" (GMA content of 12%) from Sumitomo Chemical Co., Ltd. |
| | Polyethylene resin | Examples and Comparative Examples | "Sumikalhene L405" (LDPE) from Sumitomo Chemical Co., Ltd. |
| Core layer | Polypropylene resin | Examples and Comparative Examples | "WINTEC WFX6" (metallocene-catalyzed polypropylene (propylene/ethylene copolymer) from Japan Polypropylene Corporation |
| | Polyethylene resin | Examples 7-12,19-24, Comparative Examples | "KERNEL 260T" (metallocene-catalyzed LLDPE) from Japan Polyethylene Corporation |
| | | Examples 28-30, 34-36 | "Sumikathene L211" (LDPE) from Sumitomo Chemical Co,, Ltd. |
| | Petroleum resin | Examples and Comparative Examples | "ARKON P125" from Arakawa Chemical Industries, Ltd. |

[Table 2]

(TABLE 2)

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|
| Layer structure | (Surface layer)/(Intermediate layer)/(Core layer)/(Intermediate layer)/(Surface layer) | 1/1/2/1/1 | | | | | | | | | | | |
| Surface layer | Polyester resin | 100 | 100 | 100 | 100 | 100 | 100 | 100 | 100 | 100 | 100 | 100 | 100 |
| Intermediate layer | EGMA resin | 33 | 67 | 100 | 33 | 67 | 100 | 33 | 67 | 100 | 33 | 67 | 100 |
| | Polyethylene resin | 67 | 33 | 0 | 67 | 33 | 0 | 67 | 33 | 0 | 67 | 33 | 0 |
| Core layer | Polypropylene resin | 100 | 100 | 100 | 75 | 75 | 75 | 70 | 70 | 70 | 0 | 0 | 0 |
| | Polyethylene resin | 0 | 0 | 0 | 0 | 0 | 0 | 5 | 5 | 5 | 100 | 100 | 100 |
| | Petroleum resin | 0 | 0 | 0 | 25 | 25 | 25 | 25 | 25 | 25 | 0 | 0 | 0 |
| Intermediate layer | GMA content | 4 | 8 | 12 | 4 | 8 | 12 | 4 | 8 | 12 | 3 | 6 | 12 |
| Properties | Shrinkage | B | B | B | A | A | A | A | A | A | B | B | B |
| | Time-dependent change (storage stability) | B | B | B | A | A | A | A | A | A | B | B | B |
| | Compressive strength | B | B | B | A | A | A | A | A | A | B | B | B |
| | Interlayer strenglh (unoriented film) | B | A | A | B | A | A | B | A | A | B | A | A |
| | Transparency | A | A | A | B | B | B | B | B | B | B | B | B |
| | Hot-air finish suitability | B | B | B | B | B | B | A | A | A | B | B | B |
| | Steam finish suitability | B | B | B | A | A | A | A | A | A | B | B | B |

EP 2 008 811 B1

[Table 3]

(TABLE 3)

| | | Ex. 13 | Ex. 14 | Ex. 15 | Ex. 16 | Ex. 17 | Ex. 18 | Ex. 19 | Ex. 20 | Ex. 21 | Ex. 22 | Ex. 23 | Ex. 24 |
|---|---|---|---|---|---|---|---|---|---|---|---|---|---|
| Layer structure | (Surface layer)/(Intermediate layer)/(Core layer)/(Intermediate layer)/(Surface layer) | 1/1/4/1/1 | | | | | | | | | | | |
| Surface layer | Polyester resin | 100 | 100 | 100 | 100 | 100 | 100 | 100 | 100 | 100 | 100 | 100 | 100 |
| Intermediate layer | EGMA resin | 33 | 67 | 100 | 33 | 67 | 100 | 33 | 67 | 100 | 33 | 67 | 100 |
| | Polyethylene resin | 67 | 33 | 0 | 67 | 33 | 0 | 67 | 33 | 0 | 67 | 33 | 0 |
| Core layer | Polypropylene resin | 100 | 100 | 100 | 75 | 75 | 75 | 70 | 70 | 70 | 0 | 0 | 0 |
| | Polyethylene resin | 0 | 0 | 0 | 0 | 0 | 0 | 5 | 5 | 5 | 100 | 100 | 100 |
| | Petroleum resin | 0 | 0 | 0 | 25 | 25 | 25 | 25 | 25 | 25 | 0 | 0 | 0 |
| Intermediate layer | GMA content | 4 | 8 | 12 | 4 | 8 | 12 | 4 | 8 | 12 | 4 | 8 | 12 |
| Properties | Shrinkage | B | B | B | B | B | A | B | B | B | B | B | B |
| | Time-dependent change (storage stability) | B | B | B | A | A | A | A | A | A | B | B | B |
| | Compressive strength | B | B | B | A | A | A | A | A | A | B | B | B |
| | Interlayer strength (unoriented film) | B | A | A | B | A | A | B | A | A | B | A | A |
| | Transparency | B | B | B | B | B | B | B | B | B | B | 8 | B |
| | Hot-air finish suitability | B | B | B | B | B | B | A | A | A | B | B | B |
| | Steam finish suitability | B | B | B | A | A | A | A | A | A | B | B | B |

[Table 4]

(TABLE 4)

| | | Ex. 25 | Ex. 26 | Ex. 27 | Ex. 28 | Ex. 29 | Ex. 30 | Ex. 31 | Ex. 32 | Ex. 33 | Ex. 34 | Ex. 35 | Ex. 36 |
|---|---|---|---|---|---|---|---|---|---|---|---|---|---|
| Layer structures | (Surface layer)/(Intermediate layer)/(Core layer)/(Intermediate layer)/(Surface layer) | | | 1/1/2/1/1 | | | | | | 1/1/4/1/1 | | | |
| Surface layer | Polyester resin | 100 | 100 | 100 | 100 | 100 | 100 | 100 | 100 | 100 | 100 | 100 | 100 |
| Intermediate layer | EGMA resin | 33 | 67 | 100 | 33 | 67 | 100 | 33 | 67 | 100 | 33 | 67 | 100 |
| | Polyethylene resin | 67 | 33 | 0 | 67 | 33 | 0 | 67 | 33 | 0 | 67 | 33 | 0 |
| Core layer | Polypropylene resin | 100 | 100 | 100 | 0 | 0 | 0 | 100 | 100 | 100 | 70 | 70 | 70 |
| | Polyethylene resin | 0 | 0 | 0 | 100 | 100 | 100 | 0 | 0 | 0 | 5 | 5 | 5 |
| | Petroleum resin | 0 | 0 | 0 | 0 | 0 | 0 | 0 | 0 | 0 | 25 | 25 | 25 |
| Intermediate layer | GMA content | 4 | 8 | 12 | 4 | 8 | 12 | 4 | 8 | 12 | 4 | 8 | 12 |
| Properties | Shrinkage | B | B | B | A | A | A | A | A | A | B | B | B |
| | Time-dependent change (storage stability) | B | B | B | A | A | A | A | A | A | B | B | B |
| | Compressive strength | B | B | B | A | A | A | A | A | A | B | B | B |
| | Interlayer strength (unoriented film) | B | A | A | B | A | A | B | A | A | B | A | A |
| | Transparency | A | A | A | B | B | B | B | B | B | B | B | B |
| | Hot-air finish suitability | B | B | B | A | A | A | A | A | A | B | B | B |
| | Steam finish suitability | B | B | B | A | A | A | A | A | A | B | B | B |

[Table 5]

(TABLE 5)

|  |  | Com. Ex.1 | Com. Ex. 2 | Com. Ex.3 | Com. Ex.4 | Com. Ex. 5 | Com Ex. 6 | Com. Ex. 7 | Com. Ex. 8 |
|---|---|---|---|---|---|---|---|---|---|
| Layer structure | (Surface layer)/(Intermediate layer)/(Core layer)/(Intermediate layer)/(Surface layer) | 1/1/4/1/1 | | | | 1/3/1 | | | |
| Surface layer | Polyester resin | 100 | 100 | 100 | 100 | 100 | 100 | 100 | 100 |
| Intermediate layer | EGMA resin | 0 | 0 | 0 | 0 | - | - | - | - |
|  | Polyethylene resin | 100 | 100 | 100 | 100 | - | - | - | - |
| Core layer | Polypropylene resin | 100 | 75 | 70 | 0 | 100 | 75 | 70 | 0 |
|  | Polyethylene resin | 0 | 0 | 5 | 100 | 0 | 0 | 5 | 100 |
|  | Petroleum resin | 0 | 25 | 25 | 0 | 0 | 25 | 25 | 0 |
| Intermediate layer | GMA content | 0 | 0 | 0 | 0 | 0 | 0 | 0 | 0 |
| Properties | Shrinkage | B | A | A | C | B | A | A | C |
|  | Time-dependent change (storage stability) | D | A | A | D | D | B | B | D |
|  | Compressive strength | C | C | C | D | C | C | C | D |
|  | Interlayer strength (unoriented film) | D | D | D | D | D | D | D | D |
|  | Transparency | B | B | B | B | B | B | B | B |
|  | Hot-air finish suitability | D | B | A | D | D | D | D | D |
|  | Steam finish suitability | D | B | B | D | D | B | B | D |
| *Comparative Examples 5 to 8: three-layered multilayer structure composed of two types of layers | | | | | | | | | |

[Table 6]

(TABLE 6)

|  |  | Ex. 37 | Ex. 38 | Ex. 39 | Ex. 40 |
|---|---|---|---|---|---|
| Layer structure | (Surface layer)/(Intermediate layer)/(Core layer)/(Intermediate layer)/(Surface layer) | 1/1/4/1/1 | | | |
| Surface layer | Polyester resin | 100 | 100 | 100 | 100 |
| Intermediate layer | EGMA resin | 100 | 100 | 100 | 100 |
|  | Polyethylene resin | 0 | 0 | 0 | 0 |
| Core layer | Polypropylene resin | 90 | 85 | 80 | 70 |
|  | Polyethylene resin | 0 | 0 | 0 | 0 |
|  | Petroleum resin | 10 | 15 | 20 | 30 |
| Intermediate layer | GMA content | 12 | 12 | 12 | 12 |
|  | Shrinkage | B | B | A | A |
|  | Time-dependent change (storage stability) | B | A | A | A |

(continued)

| | | Ex. 37 | Ex. 38 | Ex. 39 | Ex. 40 |
|---|---|---|---|---|---|
| Properties | Compressive strength | B | A | A | A |
| | Interlayer strength (unoriented film) | A | A | A | A |
| | Transparency | B | A | A | B |
| | Hot-air finish suitability | A | A | B | B |
| | Steam finish suitability | B | B | A | A |

Industrial Applicability

The shrink films according to the present invention are, after being used as labels, separable and recoverable from containers made typically of poly(ethylene terephthalate)s, by using the difference in specific gravity, and are suitable for recycling, because they have a low specific gravity. They give a beautiful finish even when they are attached to containers having complicated shapes, because they have a high shrinkage (shrinkage percentage) and an adequate shrinking speed. In addition, they are unlikely to undergo problems due to delamination during production processes or in the market, because they have a high interlayer strength between constitutive film layers. Furthermore, they are free from troubles such as buckling upon fitting and are resistant to reduction in productivity due to occurrence of defective pieces upon processing even when the resulting labels have a small thickness, because the films are satisfactory tough. Accordingly, the films are useful particularly as shrink labels for use typically in PET bottles.

## Claims

1. A shrink film comprising:

   a core layer;
   two plies of intermediate layer respectively arranged on both sides of the core layer; and
   two plies of surface layer respectively arranged on both outer sides of the intermediate layers,
   the shrink film having a five-layered multilayer structure composed of three types of layers [(surface layer)/(intermediate layer)/(core layer)/(intermediate layer)/(surface layer)],
   **characterized in that** the core layer is a resinous layer mainly containing a polyolefin resin, the surface layer is a resinous layer mainly containing a polyester resin, and the intermediate layer is a resinous layer mainly containing a polyethylene resin containing a glycidyl methacrylate (GMA) component, wherein
   the polyethylene resin containing a glycidyl methacrylate (GMA) component has a GMA content of 4 to 15 percent by weight, and
   the polyolefin resin has a melting point of 100 °C to 150 °C and a density of 0.80 to 0.95 g/cm$^3$.

2. The shrink film according to claim 1, wherein the core layer contains 10 to 30 percent by weight of a tackifier.

3. The shrink film according to claim 1 or 2, wherein the polyolefin resin is an ethylene-propylene random copolymers.

4. The shrink film according to any one of claims 1 to 3, wherein the polyethylene resin containing a glycidyl methacrylate (GMA) component is a random copolymer or a block copolymer of ethylene and glycidyl methacrylate, a poly(ethylene-co-glycidyl methacrylate) (EGMA).

5. The shrink film according to any one of claims 1 to 4, wherein the thickness of the intermediate layer is 1 to 0.1, and the thickness of the surface layer is 1 to 0.1, both assuming that the thickness of the core layer is 1.

6. The shrink film according to any one of claims 1 to 5, wherein the thickness of the surface layer is 1 to 10 $\mu$m, the thickness of the intermediate layer is 1 to 10 $\mu$m, and the thickness of the core layer is 5 to 50 $\mu$m.

7. The shrink film according to any one of claims 1 to 6, wherein the specific gravity of the shrink films is 0.8 to 1.20, the interlayer strength of the shrink films is 1.0 (N/15 mm) or more, the compressive strength of the shrink films is 2 N or more when measured at a film thickness of 40 $\mu$m according to Japanese Industrial Standards (JIS) P 8126, the thermal shrinkage (heat shrinkage percentage) of the shrink films is 15 % or more, and the storage stability (natural contraction: shrinkage upon elapse of 30 days at 30 °C) of the shrink films is less than 2 %.

8. The shrink film according to any one of claims 1 to 7, wherein the intermediate layer contains 20-60 % of recycled materials.

9. A shrink label having a printed layer formed on at least one side of the shrink film according to any one of claims 1 to 8, and being rolled into a cylinder to give a cylindrical shrink label.

10. A labeled container having the shrink label according to claim 9 attached to a container, shrunk by heat treatment, and thereby follows and fits the container.

**Patentansprüche**

1. Schrumpffolie umfassend:

   eine Kernschicht;
   zwei Zwischenschichtlagen, die jeweils auf beiden Seiten der Kernschicht angeordnet sind; und
   zwei Oberflächenschichtlagen, die jeweils auf beiden Außenseiten der Zwischenschichten angeordnet sind, wobei die Schrumpffolie eine fünflagige Mehrschichtenstruktur aufweist, die aus drei Arten von Schichten zusammengesetzt ist [(Oberflächenschicht)/(Zwischenschicht)/(Kernschicht)/(Zwischenschicht)/(Oberflächenschicht)],
   **dadurch gekennzeichnet, dass** die Kernschicht eine Harzschicht ist, die hauptsächlich ein Polyolefinharz enthält, die Oberflächenschicht eine Harzschicht ist, die hauptsächlich ein Polyesterharz enthält, und die Zwischenschicht eine Harzschicht ist, die hauptsächlich ein Polyethylenharz enthält, das eine Glycidylmethacrylat (GMA)-Komponente enthält, wobei
   das Polyethylenharz, das eine Glycidylmethacrylat (GMA)-Komponente enthält, einen GMA-Gehalt von 4 bis 15 Gew.-% aufweist, und
   das Polyolefinharz einen Schmelzpunkt von 100 °C bis 150 °C und eine Dichte von 0,80 bis 0,95 g/cm$^3$ aufweist.

2. Schrumpffolie gemäß Anspruch 1, wobei die Kernschicht 10 bis 30 Gew.-% eines Klebrigmachers enthält.

3. Schrumpffolie gemäß Anspruch 1 oder 2, wobei das Polyolefinharz ein statistisches Ethylen-Propylen-Copolymer ist.

4. Schrumpffolie gemäß einem der Ansprüche 1 bis 3, wobei das Polyethylenharz, das eine Glycidylmethacrylat (GMA)-Komponente enthält, ein statistisches Copolymer oder ein Blockcopolymer von Ethylen und Glycidylmethacrylat, ein Poly(ethylen-co-glycidylmethacrylat) (EGMA) ist.

5. Schrumpffolie gemäß einem der Ansprüche 1 bis 4, wobei die Dicke der Zwischenschicht 1 bis 0,1 beträgt, und die Dicke der Oberflächenschicht 1 bis 0,1 beträgt, wobei in beiden Fällen angenommen wird, dass die Dicke der Kernschicht 1 beträgt.

6. Schrumpffolie gemäß einem der Ansprüche 1 bis 5, wobei die Dicke der Oberflächenschicht 1 bis 10 μm beträgt, die Dicke der Zwischenschicht 1 bis 10 μm beträgt, und die Dicke der Kernschicht 5 bis 50 μm beträgt.

7. Schrumpffolie gemäß einem der Ansprüche 1 bis 6, wobei die relative Dichte der Schrumpffolien 0,8 bis 1,20 beträgt, die Zwischenschichtfestigkeit der Schrumpffolien 1,0 (N/15 mm) oder mehr beträgt, die Druckfestigkeit der Schrumpffolien 2 N oder mehr beträgt, wenn sie bei einer Filmdicke von 40 μm gemäß dem Japanischen Industriestandard (JIS) P 8126 gemessen wird, die thermische Schwindung (Prozentsatz der Wärmeschrumpfung) der Schrumpffolien 15 % oder mehr beträgt, und die Lagerbeständigkeit (natürliche Kontraktion: Schrumpfung nach dem Verstreichen von 30 Tagen bei 30 °C) der Schrumpffolien weniger als 2 % beträgt.

8. Schrumpffolie gemäß einem der Ansprüche 1 bis 7, wobei die Zwischenschicht 20-60 % recyclierte Materialien enthält.

9. Schrumpfetikett, das eine gedruckte Schicht aufweist, die auf wenigstens einer Seite der Schrumpffolie gemäß einem der Ansprüche 1 bis 8 gebildet ist, und zu einem Zylinder gerollt bzw. rundgebogen wird, um ein zylindrisches Schrumpfetikett zu ergeben.

10. Etikettierter Behälter mit dem Schrumpfetikett gemäß Anspruch 9, das an einem Behälter befestigt wird, durch Wärmebehandlung geschrumpft wird und sich dadurch an den Behälter anpasst und an ihm anliegt.

## Revendications

1. Film rétrécissable comprenant :

   une couche formant noyau ;
   deux plis de couche intermédiaire disposés respectivement sur les deux côtés de la couche formant noyau ; et
   deux plis de couche de surface disposés respectivement sur les deux faces externes des couches intermédiaires,
   le film rétrécissable ayant une structure multicouche à cinq couches composée de trois types de couches [(couche de surface)/(couche intermédiaire)/(couche formant noyau)/(couche intermédiaire)/(couche de surface)],
   **caractérisé en ce que** la couche formant noyau est une couche résineuse contenant principalement une résine de polyoléfine, la couche de surface étant une couche résineuse contenant principalement une résine de polyester, et la couche intermédiaire étant une couche résineuse contenant principalement une résine de polyéthylène contenant un composant méthacrylate de glycidyle (GMA), dans lequel
   la résine de polyéthylène contenant un composant méthacrylate de glycidyle (GMA) a une teneur en GMA de 4 à 15 pour cent en poids, et
   la résine de polyoléfine a un point de fusion de 100°C à 150°C et une densité de 0,80 à 0,95 g/cm$^3$.

2. Film rétrécissable selon la revendication 1, dans lequel la couche formant noyau contient 10 à 30 pour cent en poids d'un agent donnant du collant.

3. Film rétrécissable selon la revendication 1 ou 2, dans lequel la résine de polyoléfine correspond à des copolymères aléatoires d'éthylène-propylène.

4. Film rétrécissable selon l'une quelconque des revendications 1 à 3, dans lequel la résine de polyéthylène contenant un composant méthacrylate de glycidyle (GMA) est un copolymère aléatoire ou un copolymère séquencé d'éthylène et de méthacrylate de glycidyle, un poly(éthylène-co-méthacrylate de glycidyle) (EGMA).

5. Film rétrécissable selon l'une quelconque des revendications 1 à 4, dans lequel l'épaisseur de la couche intermédiaire est de 1 à 0,1, et l'épaisseur de la couche de surface est de 1 à 0,1, à la fois en faisant l'hypothèse que l'épaisseur de la couche formant noyau est de 1.

6. Film rétrécissable selon l'une quelconque des revendications 1 à 5, dans lequel l'épaisseur de la couche de surface est de 1 à 10 $\mu$m, l'épaisseur de la couche intermédiaire est de 1 à 10 $\mu$m, et l'épaisseur de la couche formant noyau est de 5 à 50 $\mu$m.

7. Film rétrécissable selon l'une quelconque des revendications 1 à 6, dans lequel la densité relative des films rétrécissables est de 0,8 à 1,20, la résistance intercouche des films rétrécissables est de 1,0 (N/15 mm) ou plus, la résistance à la compression des films rétrécissables est de 2 N ou plus lorsque mesurée à une épaisseur de film de 40 $\mu$m selon les normes industrielles japonaises (JIS) P 8126, le rétrécissement thermique (pourcentage de rétrécissement thermique) des films rétrécissables est de 15 % ou plus, et la stabilité au stockage (contraction naturelle : rétrécissement suite à l'écoulement d'une période de 30 jours à 30°C) des films rétrécissables est inférieure à 2%.

8. Film rétrécissable selon l'une quelconque des revendications 1 à 7, dans lequel la couche intermédiaire contient 20 à 60 % de matériaux recyclés.

9. Étiquette rétrécissable ayant une couche imprimée formée sur au moins une face du film rétrécissable selon l'une quelconque des revendications 1 à 8, et étant enroulée en un cylindre pour donner une étiquette rétrécissable cylindrique.

10. Récipient étiqueté présentant l'étiquette rétrécissable selon la revendication 9 fixée à un récipient, rétrécie par traitement thermique, et suivant et s'ajustant ainsi au récipient.

Fig.1

Fig.2

**EP 2 008 811 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000159946 A
- JP HEI07137212 A
- WO 0100716 A
- JP 11262981 A
- WO 2004058499 A
- JP 06071828 A
- JP 11115229 A
- JP 2005201987 A
- JP 05261873 A